# EUROPÄISCHE PATENTSCHRIFT

(11) **EP 1 868 710 B1**
(45) Veröffentlichungstag und Bekanntmachung des Hinweises auf die Patenterteilung: **17.09.2008**
(21) Anmeldenummer: 06724030.9
(22) Anmeldetag: 05.04.2006
(51) Int. Cl.: B01F 3/04, B01F 7/16, C02F 3/12

(54) **RÜHRVORRICHTUNG UND VERFAHREN ZUR ABWASSERBEHANDLUNG**
AGITATING DEVICE AND METHOD FOR SEWAGE TREATMENT
DISPOSITIF AGITATEUR ET PROCEDE POUR LE TRAITEMENT DES EAUX USEES

(30) Priorität: 12.04.2005 DE 102005016948
(43) Veröffentlichungstag der Anmeldung: 26.12.2007
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2006/003077
(87) Internationale Veröffentlichungsnummer: WO 2006/108538

(56) Entgegenhaltungen:
- DE-A1- 19 826 098
- DE-U1- 29 803 497
- RUSSIAN PATENTS ABSTRACTS Week 198406 30. März 1983 (1983-03-30), Derwent Publications Ltd., London, GB;Seite 004, AN 1984-035479 XP002388297 DMITRIEV IGOR A, SU; MITUSOVA NINA, SU: "Apparatus for agitating components" -& SU 1 007 714 A (DMITRIEV IGOR A,SU; MITUSOVA NINA,SU) 30. März 1983 (1983-03-30)

## Beschreibung

Die Erfindung betrifft eine Rührvorrichtung nach dem Oberbegriff des Anspruchs 1, Sie betrifft ferner ein Verfahren zur Abwasserbehandlung.

Eine gattungsgemäße Rührvorrichtung ist beispielsweise aus der DE 42 18 027 A1 sowie der DE 298 03 497 U1, die eine Rührvorrichtung gemäßdem Oberbegriff des Anspruchs 1 offenbart, bekannt.

Die bekannten Rührvorrichtungen weisen eine hyperboloidartigen Rührkörper auf, an dessen Oberseite mehrere vom Umfangsrand in Richtung einer Welle verlaufende Rippen vorgesehen sind. Eine Höhe der Rippen ist dabei entweder gleich bleibend oder sie nimmt vom Umfangsrand in Richtung der Welle ab. Derartige hyperboloidartige Rührkörper haben sich wegen ihrer guten Rühreigenschaften insbesondere im Bereich der Abwasserbehandlung durchgesetzt. Gleichwohl wäre eine weitere Steigerung der Effizienz derartiger Rührkörper wünschenswert.

Aufgabe der Erfindung ist es, eine Rührvorrichtung mit verbesserter Effizienz anzugeben. Nach einem weiteren Ziel der Erfindung soll ein möglichst effizientes Verfahren zur Abwasserbehandlung angegeben werden.

Diese Aufgabe wird durch die Merkmale der Ansprüche 1 und 14 gelöst. Zweckmäßige Ausgestaltungen ergeben sich aus den Merkmalen der Ansprüche 2 bis 13 und 15.

Nach Maßgabe der Erfindung ist vorgesehen, dass eine erste Höhe der Rippen zumindest abschnittsweise vom Umfangsrand des Rührkörpers in Richtung der Welle zunimmt. Damit kann überraschenderweise eine erhebliche Steigerung der Effizienz der Rührvorrichtung erreicht werden. Versuche haben ergeben, dass bei Verwendung eines mit den erfindungsgemäßen Rippen versehenen hyperboloidartigen Rührkörpers, die Effizienz um mehr als 20% gesteigert werden kann. In geeigneten Ausgestaltungsformen der Erfindung ist sogar eine Effizienzsteigerung um etwa 30% erzielt worden.

Unter einer "Höhe" der Rippen wird die Länge einer von einer Oberkante der Rippen bis zur Oberfläche des hyperboloidartigen Rührkörpers reichenden Normalen verstanden.

Nach einer Ausgestaltung der Erfindung nimmt die Höhe in einem vom Umfangsrang in Richtung der Welle verlaufenden ersten Abschnitt zu und in einem von einem ersten Ende des ersten Abschnitts weiter in Richtung der Welle verlaufenden zweiten Abschnitt ab. Die Rippen können in Draufsicht auf die Oberseite eine Krümmung aufweisen, welche insbesondere hyperbolisch ausgebildet sein kann. Rippen mit den vorgenannten Merkmalen ermöglichen eine effiziente Übertragung der Rotationsenergie des Rührkörpers auf eine diesen umgebende Flüssigkeit.

Nach einer weiteren besonders vorteilhaften Ausgestaltung weist der Rührkörper mehrere in der Nähe der Welle vorgesehene Durchbrüche auf. Die Durchbrüche sind zweckmäßigerweise regelmäßig, vorzugsweise im selben radialen Abstand, angeordnet. Die vorgeschlagenen Durchbrüche ermöglichen einerseits einen Austritt von sich unterhalb des Rührkörpers möglicherweise bildenden Gasblasen. Sie ermöglichen aber auch die Ausbildung einer axialen, zum Boden eines Beckens, in welchen der Rührkörper ragt, gerichteten Strömung. Eine solche Strömung trägt dazu bei, dass sich ggf. unterhalb des Rührkörpers ausbildende Ablagerungen, beispielsweise Sand und dgl., entfernt werden.

Nach einer weiteren zweckmäßigen Ausgestaltung sind an einer der Oberseite gegenüberliegenden Unterseite des Rührkörpers mehrere in Richtung des Umfangsrands verlaufende weitere Rippen vorgesehen. Die weiteren Rippen können radial verlaufen. Eine zweite Höhe der weiteren Rippen nimmt zweckmäßigerweise in einem von einem zentralen Bereich des Rührkörpers in Richtung des Umfangsrands verlaufenden Abschnitt zu und in einem von einem zweiten Ende des dritten Abschnitts weiter in Richtung des Umfangsrands verlaufenden vierten Abschnitt ab. Des Weiteren können die weiteren Rippen jeweils einen horizontalen Abschnitt zum Abstützen auf einem zu Transport- oder Lagerzwecken darunter gestapelten Rührelements aufweisen. Die vorgeschlagenen weiteren Rippen erzeugen bei einer Rotation des Rührkörpers einen Unterdruck. Infolgedessen wird oberhalb des Rührkörpers befindliche Flüssigkeit durch die in der Nähe der Rippen vorgesehenen Durchbrüche angesaugt und axial in Richtung eines Bodens eines Abwasserbeckens beschleunigt. Damit kann die Effizienz der Rührwirkung weiter gesteigert werden. Versuche haben ergeben, dass das Vorsehen der weiteren Rippen eine Effizienzsteigerung von etwa 8 bis 10% bewirkt. Abgesehen davon können durch die durch die Wirkung der weiteren Rippen in Kombination mit den Durchbrüchen sich ausbildende, zum Boden eines Beckens gerichtete Axialströmung und dadurch bedingte Ablagerungen unterhalb des Rührkörpers sicher und zuverlässig vermieden werden.

Die Rippen verlaufen zweckmäßigerweise vom Umfangsrand bis in die Nähe der Welle, d. h. ihre Länge erstreckt sich im Wesentlichen über die gesamte radiale Distanz der Oberseite. Im Gegensatz dazu erstrecken sich die weiteren Rippen zweckmäßigerweise nicht bis zum Umfangsrand. Ihre radiale Erstreckung ist vorteilhafterweise höchstens halb so groß wie die der Rippen.

Nach einem alternativen Gegenstand der Erfindung kann zur Steigerung der Effizienz auch eine Rührvorrichtung vorgesehen sein, bei der ein hyperboloidartiger Rührkörper über eine Welle mit einer Antriebseinrichtung verbunden ist, wobei der Rührkörper mehrere in der Nähe der Welle vorgesehene Durchbrüche aufweist, und wobei an einer Unterseite des Rührkörpers mehrere in Richtung des Umfangsrands verlaufende weitere Rippen vorgesehen sind. Hinsichtlich der Ausgestaltungen der weiteren Rippen wird auf die obigen Ausführungen verwiesen. Der hier beschriebene alternative Gegenstand der Erfindung kann selbstverständlich auch mit den vorbeschriebenen, auf der Oberseite des Rührkörpers vorgesehenen Rippen und deren vorteilhaften Ausgestaltungsformen kombiniert werden.

Nach einer weiteren Ausgestaltung ist der Rührkörper zusammen mit den Rippen und/oder den weiteren Rippen aus einem Stück, vorzugsweise aus einem faserverstärkten Kunststoff, hergestellt. Das erleichtert die Herstellung und erhöht die Stabilität des vorgeschlagenen Rührkörpers. Es kann insbesondere auf herkömmliche und gut beherrschte Herstellungstechniken zurückgegriffen werden.

Nach einer weiteren Ausgestaltung ist eine Abwasserbehandlungseinrichtung mit zumindest einer erfindungsgemäßen Rührvorrichtung vorgesehen, wobei das an der Welle aufgenommene Rührelement in ein Becken ragt und die Antriebseinrichtung an einem Gestell außerhalb des Beckens aufgenommen ist. Bei dem Gestell kann es sich um ein vom Rand des Beckens her in Richtung des Beckens erstreckendes brückenartiges Gestell handeln. Das Gestell kann auf einem Boden des Beckens abgestützt sein. Es ist aber auch möglich, dass der Rührkörper an einem vollständig auf dem Boden des Beckens abgestützten turmartigen Gestell aufgenommen ist, wobei wiederum eine Antriebseinrichtung außerhalb des Beckens aufgenommen ist. Selbstverständlich ist es auch möglich, den Rührkörper mittels Antriebseinrichtung anzutreiben, welche als Taucheinrichtung unterhalb eines Spiegels der zu rührenden Flüssigkeit an einem Gestell aufgenommen ist.

Nach einer weiteren Ausgestaltung ist vorgesehen, dass eine Belüftungseinrichtung vorgesehen ist. Eine solche Belüftungseinrichtung ermöglicht insbesondere bei einer Abwasserbehandlung einen besonders effizienten Abbau von Schadstoffen im Abwasser. Es kann sich dabei um am Boden des Beckens verlegte Rohre oder Schläuche handeln, welche zum Belüftung mit Öffnungen, Schlitzen und dgl, versehen sind. Die Belüftungseinrichtung kann aber auch Bestandteil der Rührvorrichtung sein. So kann die Luft beispielsweise durch ein in das Becken reichendes Gestell oder durch die Welle der Rührvorrichtung in die Flüssigkeit gedrückt werden.

Nach weiterer Maßgabe der Erfindung ist ein Verfahren zur Abwasserbehandlung mit folgenden Schritten vorgesehen:
a) Bereitstellen eines Beckens zur Aufnahme von Abwasser, einer erfindungsgemäßen Rührvorrichtung zum Umwälzen von im Becken aufgenommenem Abwasser sowie einer im Becken vorgesehenen Belüftungseinrichtung,
b) Befüllen des Beckens mit Abwasser,
c) Belüften des Abwassers mit der Belüftungsvorrichtung für eine vorgegebene Zeitdauer,
d) Umwälzen des Abwassers mit der Rührvorrichtung für eine weitere vorgegebene Zeitdauer,
e) Abschalten der Rührvorrichtung, so dass ein im Abwasser enthaltener Schlamm sich absetzen kann und
f) Entfernen des behandelten Abwassers aus dem Becken.

Die Schritte lit. c) und d) können wechselweise mehrfach wiederholt werden. Es ist auch möglich, den Schritt lit. d) vor dem Schritt lit. c) auszuführen. Das vorgeschlagene Verfahren ermöglicht einen besonders effizienten Abbau von im Abwasser enthaltenen Schadstoffen.

Nachfolgend werden Ausführungsbeispiele der Erfindung anhand der Zeichnungen näher erläutert. Es zeigen:
- Fig. 1: eine perspektivische Ansicht einer Rührvorrichtung,
- Fig. 2: eine Querschnittsansicht durch den Rührkörper gemäß Fig. 1,
- Fig. 3: eine perspektivische Detailansicht des Rührkörpers gemäß Fig. 1,
- Fig. 4: eine perspektivische Ansicht auf den Rührkörper gemäß Fig. 1,
- Fig. 5: eine Draufsicht auf den Rührkörper gemäß Fig. 4,
- Fig. 6: eine perspektivische teilweise aufgebrochene Ansicht des Rührkörpers gemäß Fig. 1,
- Fig. 7: die mit verschiedenen Rührkörpern erzielten Solgeschwindigkeiten in Abhängigkeit von der Entfernung vom Rührkörper,
- Fig. 8: den Leistungseintrag über dem Beckenvolumen für einen erfindungsgemäßen Rührkörper im Vergleich zu einem herkömmlichen Rührkörper und
- Fig. 9: die Motornennleistung über dem Beckenvolumen für einen erfindungsgemäßen Rührkörper im Vergleich zu einem herkömmlichen Rührkörper.

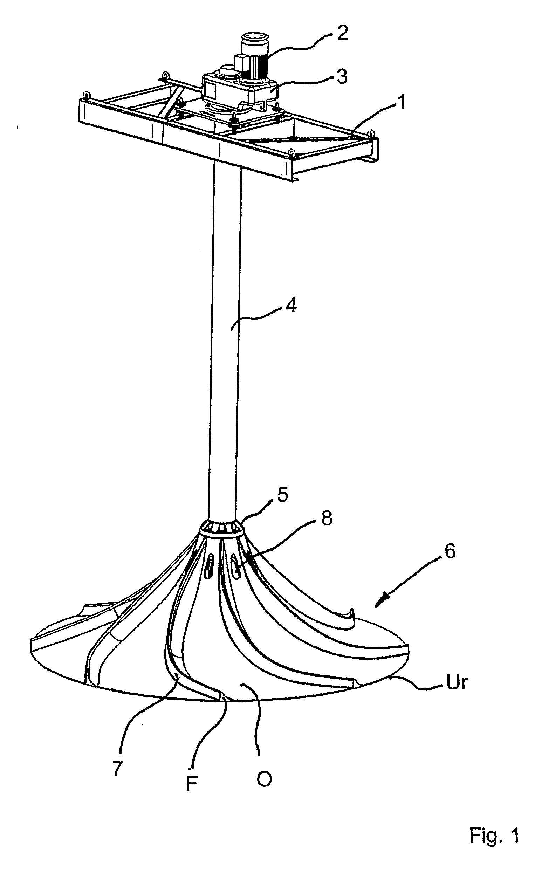

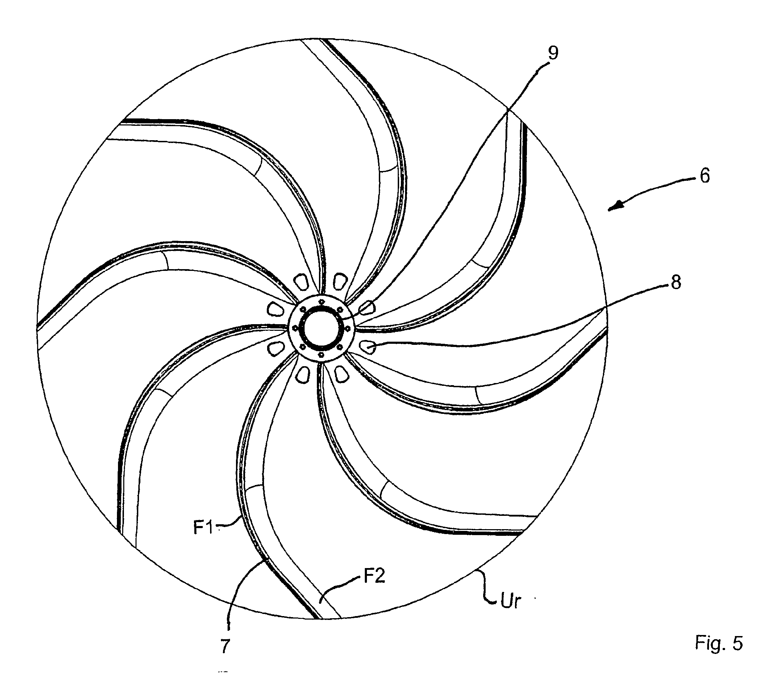

Fig. 1 zeigt eine Rührvorrichtung, bei der ein an einem abschnittsweise dargestellten Gestell 1 eine Antriebsvorrichtung 2 mit einem Getriebe 3 aufgenommen ist. Von dem Getriebe 3 erstreckt sich eine Welle 4, welche z. B. aus einem aus faserverstärktem Kunststoff hergestellten Rohr besteht. An einem am Ende der Welle 4 vorgesehenen Flansch 5 ist ein, vorzugsweise aus faserverstärktem Kunststoff hergestellter, Rührkörper 6 angebracht. Der Rührkörper 6 weist eine hyperboloidartige Form auf. An seiner Oberseite O sind Rippen 7 vorgesehen. Eine Querschnittsfläche F der Rippen 7 ist asymmetrisch mit einer steil ansteigenden Flanke und einer flach abfallenden Flanke ausgebildet. Wie insbesondere in Zusammensicht mit Fig. 5 ersichtlich ist, erstrecken sich die Rippen 7 von einem Umfangsrand Ur des Rührkörpers 6 in Richtung der Welle 4. Die Rippen 7 sind, vorzugsweise hyperboloidartig, gekrümmt. Eine steile Flanke des die Rippen 7 bildenden Profils ist in Fig. 5 mit dem Bezugszeichen F1, eine flach abfallende Flanke mit dem Bezugszeichen F2, bezeichnet.

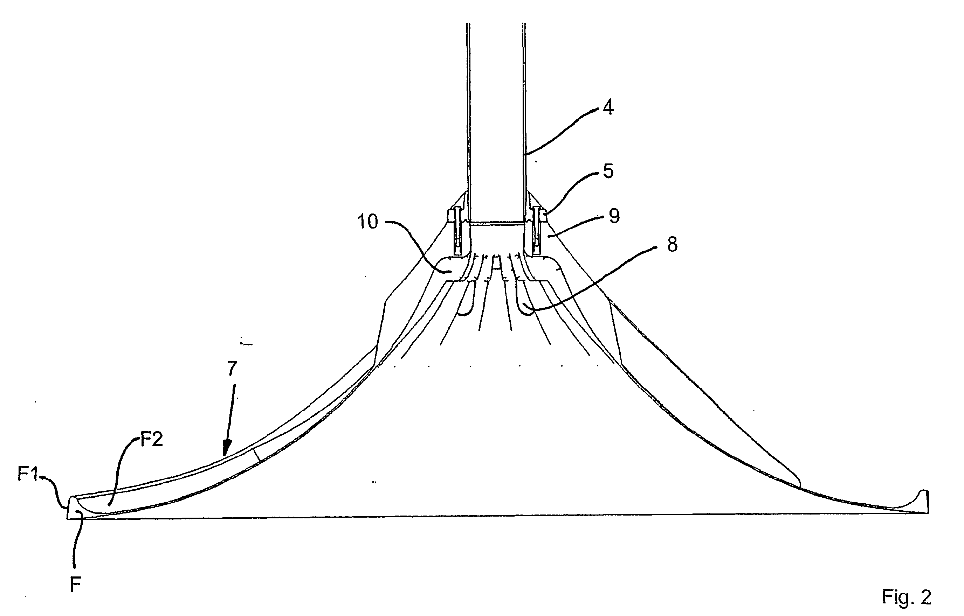

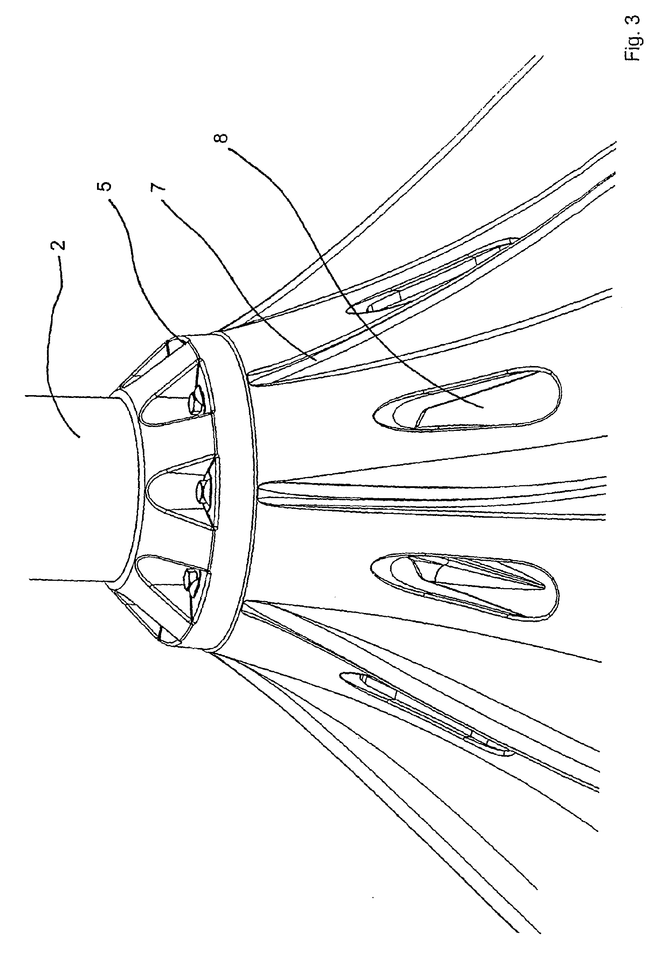

In den Fig. 1 bis 5 sind mit dem Bezugszeichen 8 Durchbrüche gekennzeichnet, welche in der Nähe der Welle 4 bzw. in der Nähe eines Befestigungsabschnitts 9 des Rührkörpers 6 vorgesehen sind. Die Durchbrüche 8 sind zwischen den Rippen 7 angeordnet. Sie weisen eine längliche oder schlitzartige Form auf und erstrecken sich im Wesentlichen parallel zu den Rippen 7.

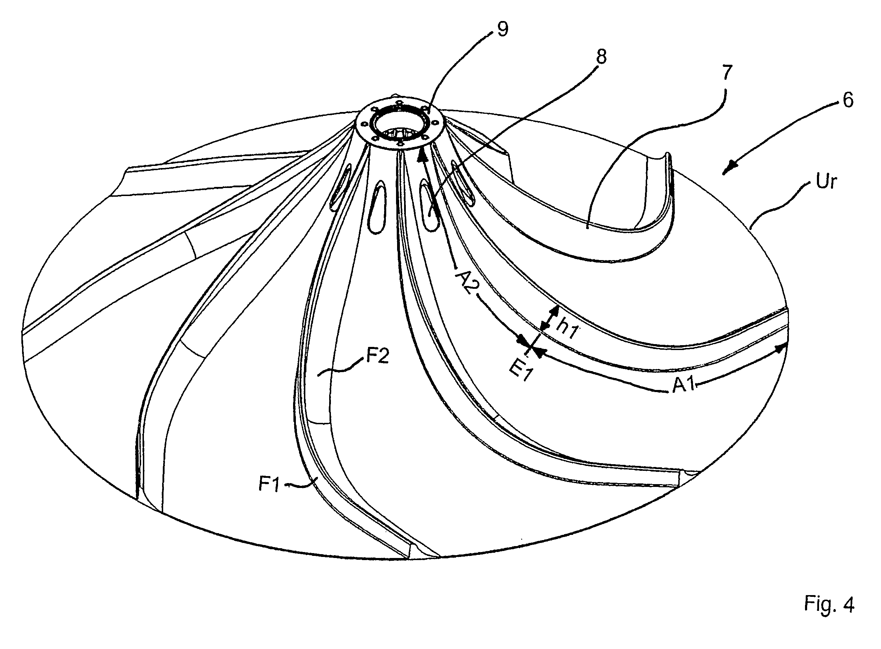

Wie insbesondere aus Fig. 4 erkennbar ist, nimmt eine erste Höhe h1 in einem vom Umfangsrand Ur in Richtung des Befestigungsabschnitts 9 verlaufenden ersten Abschnitt A1 stetig zu. Die erste Höhe h1 ist an einem ersten Ende E1 des ersten Abschnitts A1 maximal. Die erste Höhe h1 nimmt in einem vom ersten Ende E1 in Richtung des Befestigungsabschnitts 9 sich erstreckenden zweiten Abschnitt A2 stetig ab. Sie ist in der Nähe des Befestigungsabschnitts 9 gleich Null. Ein Verhältnis der Längen der Abschnitte A1/A2 kann im Bereich von 0,5 bis 1,5 liegen.

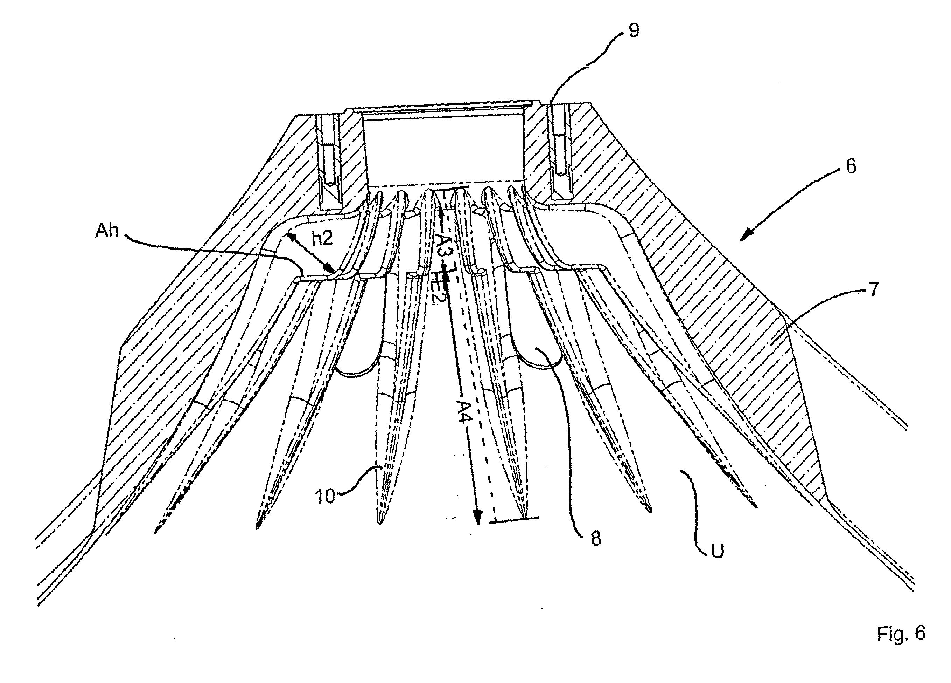

Fig. 6 zeigt eine perspektivische Ansicht eines teilweise aufgebrochenen Rührkörpers 6. An einer Unterseite U sind weitere Rippen 10 vorgesehen, welche sich vom Befestigungsabschnitt 9 bzw. einem zentralen Bereich des Rührkörpers 6 radial in Richtung des (hier nicht sichtbaren) Umfangsrands Ur erstrecken. Ähnlich wie bei den auf der Oberseite O vorgesehenen Rippen 7 nimmt auch eine zweite Höhe h2 der weiteren Rippen 10 in einem dritten Abschnitt A3, welcher sich vom Befestigungsabschnitt 9 in Richtung des Umfangsrand Ur erstreckt, zu. An einem weiteren Ende E2 des dritten Abschnitts A3 ist die zweite Höhe h2 maximal. Sie nimmt in einem vom weiteren Ende E2 in Richtung des Umfangsrands Ur verlaufenden vierten Abschnitt A4 stetig bis auf Null ab.

Die weiteren Rippen 10 weisen einen horizontalen Abschnitt Ah auf, welcher eine Auflagefläche zum Stapeln des Rührkörpers 6 auf dem Befestigungsabschnitt 9 eines darunter befindlichen weiteren Rührkörpers dient.

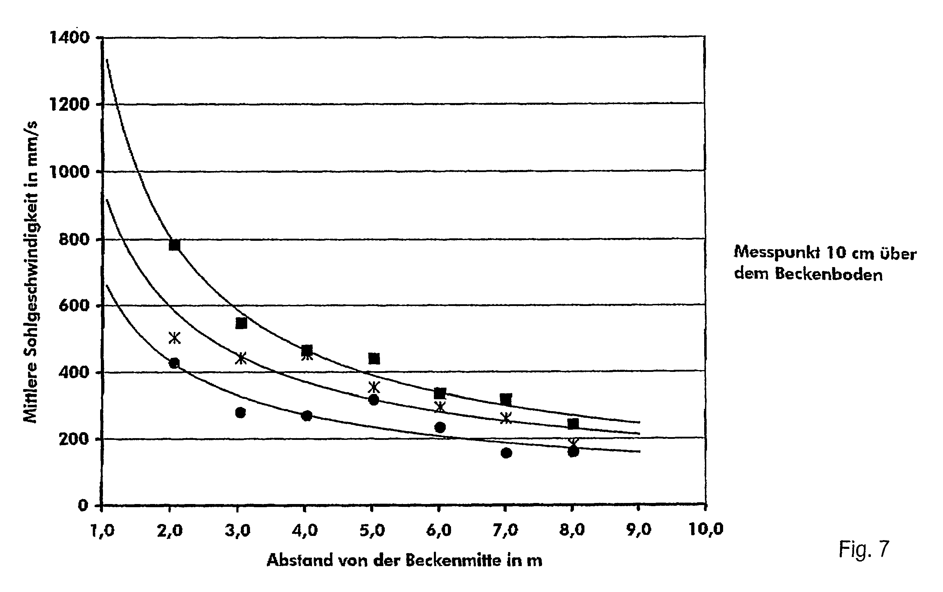

Die vorteilhafte Wirkungsweise der Rührvorrichtung wird insbesondere anhand der in Fig. 7 gezeigten vergleichenden Messergebnisse deutlich. Die mit einem Kreis gekennzeichneten Messwerte sind mit einem Rührkörper gewonnen worden, an dessen Oberseiten Rippen mit einer gleich bleibenden ersten Rippenhöhe vorgesehen gewesen sind. Die mit einem Kreuz gekennzeichneten Messwerte sind mit einem weiteren Rührkörper erzielt worden, an dessen Oberseite Rippen mit einer gleich bleibenden zweiten Rippenhöhe angebracht gewesen sind. Die zweite Rippenhöhe ist größer als die erste Rippenhöhe gewesen. Die mit Quadraten gekennzeichneten Messwerte sind mit einem erfindungsgemäßen Rührkörper erzielt worden. Wie in Fig. 7 vergleichend dargestellten Messwerte zeigen eindrucksvoll die verbesserte Effizienz des erfindungsgemäßen Rührkörpers 6. Eine damit erzielte Solgeschwindigkeit am Boden eines mit einer Flüssigkeit gefüllten Beckens ist um bis zu 30% höher als die mit herkömmlichen Rührkörpern erzielbaren Solgeschwindigkeiten.

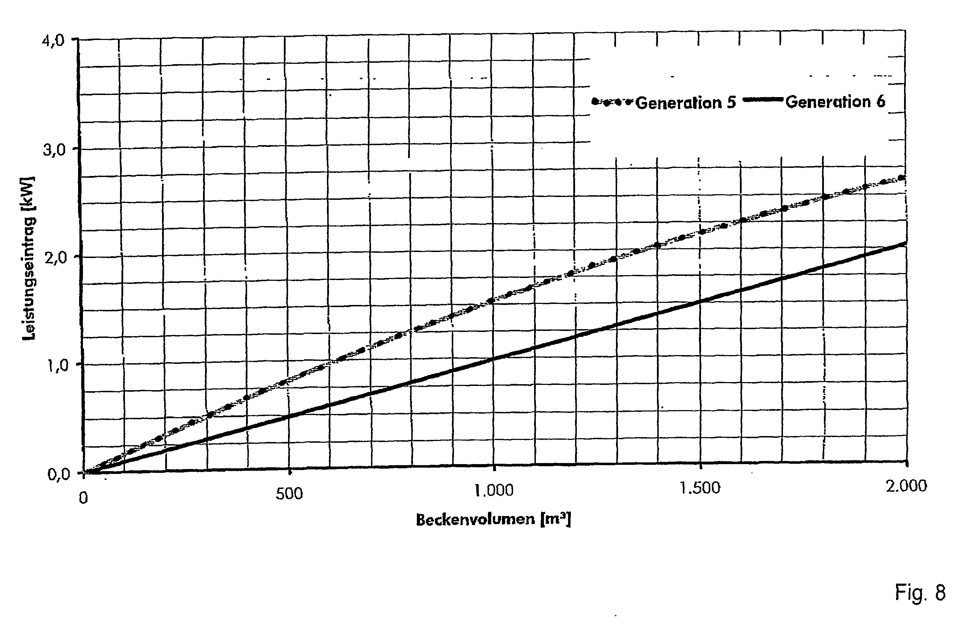

In Fig. 8 ist der Leistungseintrag eines herkömmlicher Rührkörpers (Generation 5) im Vergleich zu einem erfindungsgemäßen Rührkörper (Generation 6) über dem Beckenvolumen aufgetragen. Bei dem herkömmlichen Rührkörper (Generation 5) hat es sich um einen Rührkörper gehandelt, wie er aus der DE 298 03 497 U1 bekannt ist. Wie aus Fig. 8 ersichtlich ist, kann mit dem erfindungsgemäßen Rührkörper (Generation 6) beispielsweise bei einem Beckenvolumen von 1000 m³ der Leistungseintrag im Vergleich zu dem herkömmlichen Rührkörper (Generation 5) um 40 % reduziert werden.

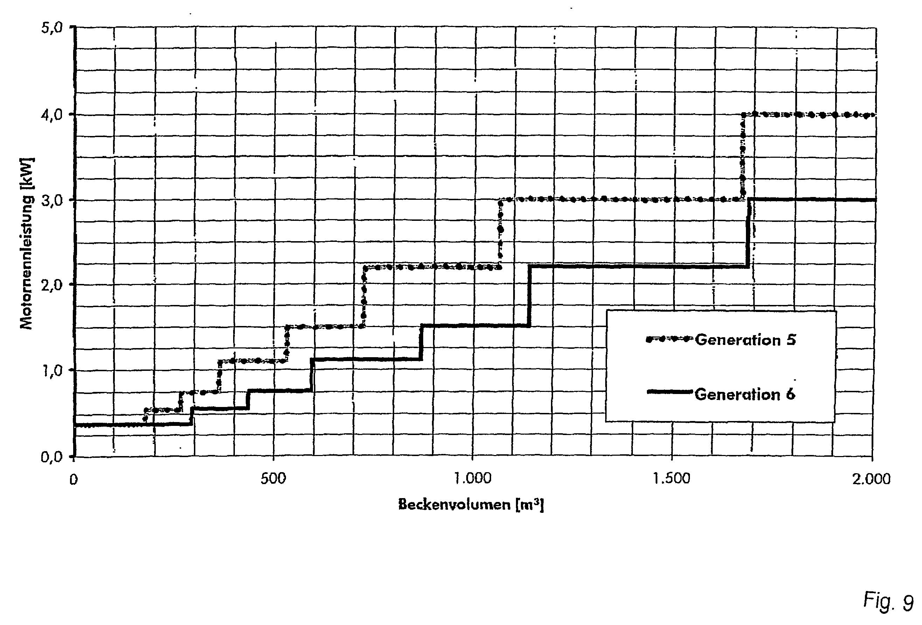

Fig. 9 zeigt die Motornennleistung für den herkömmlichen Rührkörper (Generation 5) gemäß der DE 298 03 497 U1 gegenüber dem erfindungsgemäßen Rührkörper (Generation 6) über dem Beckenvolumen. Wie aus Fig. 9 ersichtlich ist, kann die Motornennleistung zum Antrieb der verglichenen Rührkörper bei einem Beckenvolumen von 1000 m³ von etwa 2,2 kW bei dem herkömmlichen Rührkörper (Generation 5) auf 1,5 kW bei einem erfindungsgemäßen Rührkörper (Generation 6) reduziert werden. Das entspricht einer Einsparung der zu installierenden Leistung, d. h. der bereitzustellenden Energie, um mehr als 30 %.

### Bezugszeichenliste

- 1: Gestell
- 2: Antriebseinrichtung
- 3: Getriebe
- 4: Welle
- 5: Flansch
- 6: Rührkörper
- 7: Rippe
- 8: Durchbruch
- 9: Befestigungsabschnitt
- 10: weitere Rippe

- A1: erster Abschnitt
- A2: zweiter Abschnitt
- A3: dritter Abschnitt
- A4: vierter Abschnitt
- Ah: horizontaler Abschnitt
- E1: erstes Ende
- E2: zweites Ende
- F1: steile Flanke
- F2: flache Flanke
- h1: erste Höhe
- h2: zweite Höhe
- O: Oberseite
- U: Unterseite
- Ur: Umfangsrand

## Patentansprüche

1. Rührvorrichtung, bei der ein hyperboloidartiger Rührkörper (6) über eine Welle (4) mit einer Antriebseinrichtung (2, 3) verbunden ist, wobei an einer Oberseite (O) des Rührkörpers (6) mehrere vom Umfangsrand (Ur) in Richtung der Welle (4) verlaufende Rippen (7) vorgesehen sind,
**dadurch gekennzeichnet, dass**
eine erste Höhe (h1) der Rippen (7) zumindest abschnittsweise vom Umfangsrand (Ur) des Rührkörpers (6) in Richtung der Welle (4) zunimmt.

2. Rührvorrichtung nach Anspruch 1, wobei die erste Höhe (h1) in einem vom Umfangsrand (Ur) in Richtung der Welle (4) verlaufenden ersten Abschnitt (A1) zunimmt und in einem von einem ersten Ende (E1) des ersten Abschnitts (A1) weiter in Richtung der Welle (4) verlaufenden zweiten Abschnitt (A2) abnimmt.

3. Rührvorrichtung nach einem der vorhergehenden Ansprüche, wobei die Rippen (7) in Draufsicht auf die Oberseite (O) eine Krümmung aufweisen.

4. Rührvorrichtung nach einem der vorhergehenden Ansprüche, wobei die Krümmung eine hyperbolische Krümmung ist.

5. Rührvorrichtung nach einem der vorhergehenden Ansprüche, wobei der Rührkörper (6) mehrere in der Nähe der Welle (4) vorgesehene Durchbrüche (8) aufweist.

6. Rührvorrichtung nach einem der vorhergehenden Ansprüche, wobei die Durchbrüche (8) regelmäßig, vorzugsweise im selben radialen Abstand, angeordnet sind.

7. Rührvorrichtung nach einem der vorhergehenden Ansprüche, wobei an einer der Oberseite (O) gegenüberliegenden Unterseite (U) des Rührkörpers (6) mehrere in Richtung des Umfangsrands (Ur) verlaufende weitere Rippen (10) vorgesehen sind.

8. Rührvorrichtung nach einem der vorhergehenden Ansprüche, wobei die weiteren Rippen (10) radial verlaufen.

9. Rührvorrichtung nach einem der vorhergehenden Ansprüche, wobei eine zweite Höhe (h2) der weiteren Rippen (10) in einem von einem zentralen Bereich des Rührkörpers (6) in Richtung des Umfangsrands (Ur) verlaufenden dritten Abschnitt (A3) zunimmt und in einem von einem zweiten Ende (E2) des dritten Abschnitts (A3) weiter in Richtung des Umfangsrands (Ur) verlaufenden vierten Abschnitt (A4) abnimmt.

10. Rührvorrichtung nach einem der vorhergehenden Ansprüche, wobei die weiteren Rippen (10) jeweils einen horizontalen Abschnitt (Ah) zum Abstützen auf einem zu Transport- oder Lagerzwecken darunter gestapelten weiteren Rührelements aufweisen.

11. Rührvorrichtung nach einem der vorhergehenden Ansprüche, wobei der Rührkörper (6) zusammen mit den Rippen (7) und/oder den weiteren Rippen (10) aus einem Stück, vorzugsweise aus einem faserverstärkten Kunststoff, hergestellt ist.

12. Abwasserbehandlungseinrichtung mit zumindest einer Rührvorrichtung nach einem der vorhergehenden Ansprüche, wobei bei das an der Welle (4) aufgenommene Rührelement (6) in ein Becken ragt und die Antriebseinrichtung (2, 3) an einem Gestell (1) außerhalb des Beckens aufgenommen ist.

13. Abwasserbehandlungseinrichtung nach Anspruch 12, wobei im Becken eine Belüftungseinrichtung vorgesehen ist.

14. Verfahren zur Abwasserbehandlung mit folgenden Schritten:
a) Bereitstellen eines Beckens zur Aufnahme von Abwasser, einer Rührvorrichtung nach einem der vorhergehenden Ansprüche zum Umwälzen von im Becken aufgenommenem Abwasser sowie einer im Becken vorgesehenen Belüftungseinrichtung,
b) Befüllen des Beckens mit Abwasser,
c) Belüften des Abwassers mit der Belüftungsvorrichtung für eine vorgegebene Zeitdauer,
d) Umwälzen des Abwassers mit der Rührvorrichtung für eine weitere vorgegebene Zeitdauer,
e) Abschalten der Rührvorrichtung, so dass ein im Abwasser enthaltener Schlamm sich absetzen kann und
f) Entfernen des behandelten Abwassers aus dem Behälter.

15. Verfahren nach Anspruch 14, wobei die Schritte lit. C und d wechselweise mehrfach wiederholt werden.

## Claims

1. Agitating device on which a hyperboloid-like agitating body (6) is connected with a drive unit (2, 3) via a shaft (4), wherein a plurality of ribs (7) is provided on an upper side (O) of the agitating body (6) running from the circumferential boundary (Ur) in the direction of the shaft (4),
**characterized in that**
a first height (h1) of the ribs (7) increases at least in sections from the circumferential boundary (Ur) of the agitating body (6) in the direction of the shaft (4).

2. Agitating device as defined in claim 1, wherein the first height (h1) increases in a first section (A1) running from the circumferential boundary (Ur) in the direction of the shaft (4) and decreases in a second section (A2) running from a first end (E1) of the first section (A1) further in the direction of the shaft (4).

3. Agitating device as defined in one of the preceding claims, wherein the ribs (7) show a bend in the top view of the upper side (O).

4. Agitating device as defined in one of the preceding claims, wherein the bend is a hyperbolic bend.

5. Agitating device as defined in one of the preceding claims, wherein the agitating body (6) has a plurality of breakthroughs (8) provided in the vicinity of the shaft (4).

6. Agitating device as defined in one of the preceding claims, wherein the breakthroughs (8) are arranged at regular intervals, preferably at the same radial distance.

7. Agitating device as defined in one of the preceding claims, wherein a plurality of further ribs (10) is provided on an underside (U) of the agitating body (6) opposite the upper side (O) running in the direction of the circumferential boundary (Ur).

8. Agitating device as defined in one of the preceding claims, wherein the further ribs (10) run radially.

9. Agitating device as defined in one of the preceding claims, wherein a second height (h2) of the further ribs (10) increases in a third section (A3) running from a central area of the agitating body (6) in the direction of the circumferential boundary (Ur) and decreases in a fourth section (A4) running from a second end (E2) of the third section (A3) further in the direction of the circumferential boundary (Ur).

10. Agitating device as defined in one of the preceding claims, wherein the further ribs (10) each have a horizontal section (Ah) to support a further agitating element stacked beneath for transport or storage purposes.

11. Agitating device as defined in one of the preceding claims, wherein the agitating body (6) together with the ribs (7) and/or the further ribs (10) is manufactured from one piece, preferably from a fiber-reinforced plastic.

12. Sewage treatment unit with at least one agitating device as defined in one of the preceding claims, wherein the agitating element (6) held on the shaft (4) protrudes into a basin and the drive unit (2, 3) is held on a frame (1) outside the basin.

13. Sewage treatment unit as defined in claim 12, wherein an aeration unit is provided in the basin.

14. Method for sewage treatment having the following steps:
a) Providing a basin to hold the sewage, an agitating device according to one of the preceding claims to circulate the sewage held in the basin as well as an aeration device provided in the basin,
b) Filling the basin with sewage,
c) Aerating the sewage with the aeration device for a specified amount of time,
d) Circulating the sewage with the agitating device for a further specified amount of time,
e) Turning off the agitating device so that a sludge contained in the sewage can settle and
f) Removing the treated sewage from the basin.

15. Method as defined in claim 14, wherein steps c and d are repeated alternately a plurality of times.

## Revendications

1. Agitateur comportant un corps agitateur en forme d'hyperbole (6) relié à un dispositif d'entraînement (2, 3) via un arbre (4), plusieurs ailettes (7) allant du pourtour (Ur) à l'arbre (4) étant prévues sur une partie supérieure (O) du corps agitateur (6),
**caractérisé en ce que**
une première hauteur (h1) des ailettes (7) augmente au moins segment par segment du pourtour (Ur) du corps agitateur (6) à l'arbre (4).

2. Agitateur selon la revendication 1, où 1a première hauteur (h1) augmente dans un premier segment (A1) allant du pourtour (Ur) à l'arbre (4) et diminue dans un deuxième segment (A2) allant d'une première extrémité (E1) du premier segment (A1) à l'arbre (4).

3. Agitateur selon l'une des revendications précédentes, où les ailettes (7) présentent vue de dessus une courbe sur la partie supérieure (O).

4. Agitateur selon l'une des revendications précédentes, où la courbe est une courbe hyperbolique.

5. Agitateur selon l'une des revendications précédentes, où le corps agitateur (6) présente plusieurs ouvertures (8) prévues à proximité de l'arbre (4).

6. Agitateur selon l'une des revendications précédentes, où les ouvertures (8) sont espacées à intervalles réguliers, de préférence à intervalle radial égal.

7. Agitateur selon l'une des revendications précédentes, où plusieurs autres ailettes (10) allant vers le pourtour (Ur) sont prévues sur une partie inférieure (U) du corps agitateur (6) opposée à la partie supérieure (O).

8. Agitateur selon l'une des revendications précédentes, où les autres ailettes (10) sont orientées radialement.

9. Agitateur selon l'une des revendications précédentes, où une deuxième hauteur (h2) des autres ailettes (10) augmente dans un troisième segment (A3) allant d'une zone centrale du corps agitateur (6) au pourtour (Ur) et diminue dans un quatrième segment (A4) allant d'une deuxième extrémité (E2) du troisième segment (A3) au pourtour (Ur).

10. Agitateur selon l'une des revendications précédentes, où les autres ailettes (10) présentent respectivement un segment horizontal (Ah) pour le support sur un autre élément agitateur sous-étagé à des fins de transport ou de stockage.

11. Agitateur selon l'une des revendications précédentes, où le corps agitateur (6) avec les ailettes (7) et/ou les autres ailettes (10) est composé d'une pièce, de préférence en matière plastique renforcée de fibres.

12. Installation de traitement des eaux usées avec au moins un agitateur selon l'une des revendications précédentes, où l'élément agitateur (6) positionné sur l'arbre (4) fait saillie dans un bassin et le dispositif d'entraînement (2, 3) est logé sur un support (1) à l'extérieur du bassin.

13. Installation de traitement des eaux usées selon la revendication 12, où un dispositif d'aération est prévu dans le bassin.

14. Procédé pour le traitement des eaux usées selon les opérations suivantes :
a) mise à disposition d'un bassin pour la récupération d'eaux usées, d'un agitateur selon l'une des revendications précédentes pour le brassage des eaux usées récupérées dans le bassin ainsi que d'un dispositif d'aération prévu dans le bassin,
b) remplissage du bassin avec des eaux usées,
c) aération des eaux usées avec le dispositif d'aération pour une durée prédéterminée,
d) brassage des eaux usées avec l'agitateur pour une autre durée prédéterminée,
e) mise hors service de l'agitateur de sorte que la boue contenue dans les eaux usées puisse se déposer et
f) évacuation des eaux usées traitées du bac.

15. Procédé selon la revendication 14, où les opérations lettre c et d sont répétées plusieurs fois alternativement.
